# EUROPEAN PATENT SPECIFICATION

(11) **EP 2 907 702 B1**
(45) Date of publication and mention of the grant of the patent: **08.08.2018**
(21) Application number: 15154681.9
(22) Date of filing: 11.02.2015
(51) Int. Cl.: B60R 16/033

(54) **Vehicle battery system**
Fahrzeugbatteriesystem
Système de batterie de véhicule

(30) Priority: 12.02.2014 JP 2014024801
(43) Date of publication of application: 19.08.2015
(73) Proprietor: Mitsubishi Jidosha Kogyo Kabushiki Kaisha, Tokyo 108-8410 (JP)
(72) Inventor: Funakoshi, Hiroshi, Tokyo, 108-8410 (JP)
(74) Representative: Regimbeau

(56) References cited:
- EP-A2- 1 093 974
- EP-A2- 1 401 082
- EP-A2- 2 272 722
- DE-A1- 19 628 222
- US-A1- 2014 015 534

## Description

### BACKGROUND

The present invention relates to a vehicle battery system which has first and second storage batteries mounted on a vehicle provided with an engine, and particularly relates to charging the first and second storage batteries by electric power generated by an alternator.

Various electric devices (electric loads) such as lamps including headlights, small lights, brake lamps, an indoor light, etc., power windows, wipers, driving motors for fans of an air conditioner, a radiator, etc., a starter for starting up an engine, an audio device, a navigation device, etc. are mounted on a vehicle such as a car. Electric power consumed by those electric loads is supplied from a battery which can be charged and discharged. On the other hand, the vehicle is provided with an alternator (generator) which is driven by the engine. The battery is charged timely by electric power generated by the alternator.

In addition, recently, a vehicle mounted with a plurality of batteries has been put into use in order to increase electric loads or improve the fuel efficiency of the vehicle. For example, a vehicle is provided with a first storage battery which is a lead-acid battery for supplying electric power to electric loads including a starter for starting up an engine, and a second storage battery which is connected in parallel with the first storage battery. Such a vehicle with a battery system is known from EP 1 401 082. In such a vehicle battery system provided with a first storage battery and a second storage battery, the first and second storage batteries may be charged concurrently. Specifically, for example, a switching unit such as a relay is disposed in a connection wire which connects an alternator and a lead-acid storage battery (first storage battery) with a lithium ion storage battery (second storage battery) so that the switching unit can be switched to control charging or discharging of the second storage battery (see JP-A-2013-198318) .

In order to charge the first storage battery and the second storage battery concurrently as described above, there is a fear that electric power required for charging the first storage battery and the second storage battery cannot be shared but the charged capacity of each storage battery may be lowered extremely. For example, in such a situation that electric power consumed by electric loads during idling is comparatively large, the margin of power generation in the alternator is so small that the charged capacity of each storage battery may be lowered extremely. Particularly, the theoretical electromotive force of the second storage battery consisting of a nickel-hydrogen battery or the like is larger than that of the first storage battery consisting of a lead-acid battery, and the discharge speed of the second storage battery is higher than that of the first storage battery. Thus, the charged capacity of the second storage battery is apt to be lowered extremely.

Then, there is a problem that deterioration may proceed easily in the second storage battery consisting of a nickel-hydrogen battery or the like when the charged capacity is lower than a predetermined value, that is, when the second storage battery is over-discharged.

### SUMMARY

The present invention has been developed in consideration of the foregoing circumstances. An object of the invention is to provide a vehicle battery system, in case where a plurality of storage batteries are charged concurrently, capable of suppressing lowering of the charging rate of at least one of the storage batteries and suppressing progress of deterioration in the at least one of the storage batteries.

In order to achieve the above object, according to the invention, there is provided a vehicle battery system comprising: a first storage battery which is configured to supply electric power to a starter for starting up an engine; a second storage battery which is connected in parallel with the first storage battery and which includes an internal switching unit that is configured to switch a connection state with the first storage battery; an alternator which is connected to the first and second storage batteries and which is configured to be driven by the engine so as to generate electric power; a charging state detection unit which is configured to detect a charging state of the second storage battery: a charging control unit which is configured to control a power generating state of the alternator and a switching state of the internal switching unit based on a detection result of the charging state detection unit; and a power generation margin determination unit which is configured to determine whether there is a margin in the power generation of the alternator or not, wherein, when the charging state detection unit detects that a charging rate of the second storage battery is not higher than a minimum threshold, and the power generation margin determination unit determines that there is no margin in the power generation, the charging control unit controls the internal switching unit into an open state, and, when the power generation margin determination unit determines that there is a margin in the power generation, the charging control unit changes the internal switching unit from the open state to a closed state. According to the above configuration, extreme lowering of the charging rate of the second storage battery can be suppressed so that progress of deterioration can be delayed.

The charging control unit may control the internal switching unit into the open state as soon as the charging rate of the second storage battery decreases by a rate after the charging state detection unit detects that the charging rate of the second storage battery is not higher than the minimum threshold.

In this case, the number of operations in the internal switching unit can be suppressed to be as small as possible. In addition, the lowering of the charging rate of the second storage battery can be stopped at a proper timing so that electric power in the second storage battery can be used efficiently.

Further, the first storage battery may consist of a lead-acid battery, and the second storage battery may consist of a nickel-hydrogen battery or a lithium ion battery.

According to the invention, as has been described above, it is possible to effectively suppress deterioration of the second storage battery.

### BRIEF DESCRIPTION OF THE DRAWINGS

Fig. 1 is a diagram showing the configuration of a vehicle battery system according to an embodiment of the invention.
Fig. 2 is a diagram showing the configuration of a vehicle battery system according to the embodiment of the invention.
Fig. 3 is a diagram showing the configuration of a vehicle battery system according to the embodiment of the invention.
Fig. 4 is a diagram showing the configuration of a vehicle battery system according to the embodiment of the invention.

### DETAILED DESCRIPTION OF EXEMPLARY EMBODIMENTS

A vehicle battery system according to an embodiment of the invention will be described below in detail with reference to the drawings.

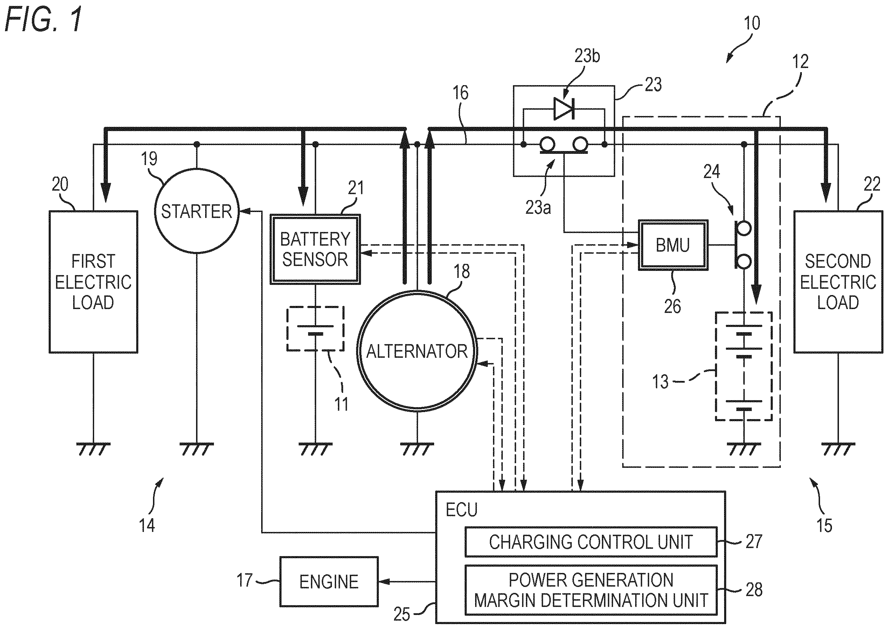

As shown in Fig. 1, a vehicle battery system 10 according to the embodiment has two storage batteries, that is, a first storage battery 11 and a second storage battery 12 in order to supply electric power to various electric loads mounted on a vehicle. The first storage battery 11 consists of a lead-acid battery, and the second storage battery 12 consists of a nickel-hydrogen battery, a lithium ion battery or the like. The second storage battery 12 in the embodiment has a battery cell unit 13. Though not shown, the battery cell unit 13 has a configuration in which a plurality of battery cells (nickel-hydrogen cells), for example, 10 battery cells are connected in series.

The first storage battery 11 and the second storage battery 12 are connected in parallel. Specifically, the vehicle battery system 10 includes a first electric circuit 14 including the first storage battery 11 and a second electric circuit 15 including the second storage battery 12. The first electric circuit 14 and the second electric circuit 15 are connected through a connection wire 16.

The first electric circuit 14 has a configuration in which the first storage battery 11, an alternator (generator) 18 driven by an engine 17 to generate electric power, a starter 19 for starting up the engine 17, and a first electric load 20 are connected in parallel. In addition, a battery sensor (first charging state detection unit) 21 for detecting the charging state of the first storage battery 11, for example, for detecting a charging rate (SOC), a temperature, etc. is provided in the first electric circuit 14. Incidentally, the first electric load 20 is an electric load which may be restarted when the engine 17 starts up, that is, an electric load in which there will arise no problem only if electric power is supplied thereto during running of the vehicle. Examples of the first electric load 20 may include headlamps, a heater, etc. in the vehicle.

On the other hand, the second electric circuit 15 has a configuration in which the second storage battery 12 and a second electric load 22 are connected in parallel. Unlike the first electric load 20, the second electric load 22 is an electric load which is preferable not to be restarted when the engine 17 starts up. Examples of the second electric load 22 may include a car navigation device, an audio device, etc. Incidentally, how to distribute various electric loads into the first electric load 20 and the second electric load 22 is not limited to the aforementioned examples, but may be set desirably in accordance with necessity.

An external relay unit (external switching unit) 23 which can block a flow of electricity from the second electric circuit 15 side to the first electric circuit 14 side is provided in the connection wire 16 which connects the first electric circuit 14 and the second electric circuit 15 configured thus. The external relay unit 23 has a rectification portion 23b consisting of diodes as well as a switch portion 23a.

When the switch portion 23a is in a closed state (connection state) as shown in Fig. 1, both the flow of electricity from the first electric circuit 14 side to the second electric circuit 15 side and the flow of electricity from the second electric circuit 15 side to the first electric circuit 14 side can be generated in accordance with the charging states of the first storage battery 11 and the second storage battery 12, the power generating state of the alternator 18, the amounts of power consumption in the first electric load 20 and the second electric load 22, etc. That is, electric power is sometimes supplied from the first storage battery 11 or the alternator 18 to the second electric load 22 and sometimes supplied from the second storage battery 12 to the first electric load 20.

For example, when the charged capacities of the first storage battery 11 and the second storage battery 12 are sufficient during operation of the engine 17, the switch portion 23a is controlled into the closed state. In this state, electric power is supplied to the first electric load 20 not only from the first storage battery 11 but also from the second storage battery 12. Thus, the amount of power generation in the alternator 18 can be suppressed so that the fuel efficiency can be improved accordingly.

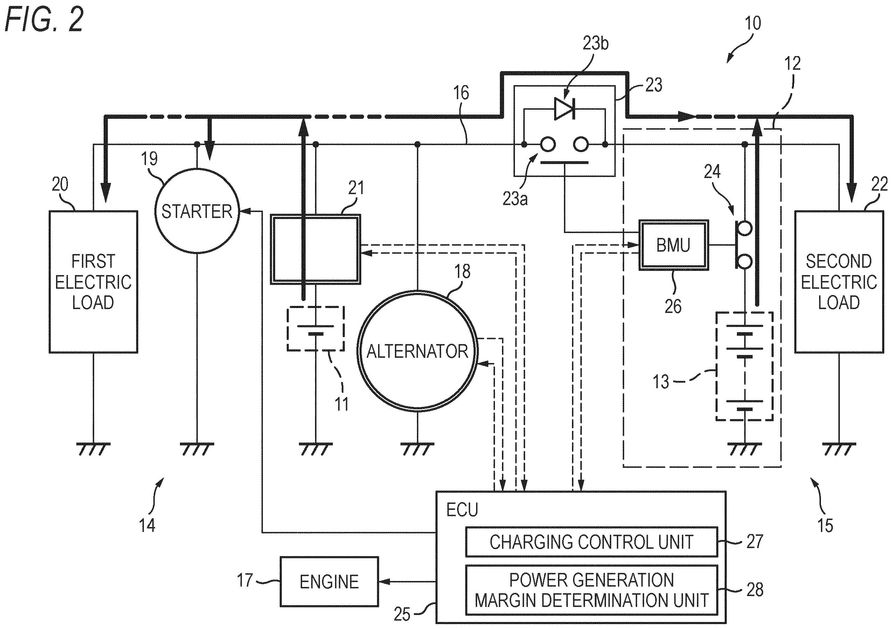

On the other hand, when the switch portion 23a is in an open state (disconnection state) as shown in Fig. 2, only the flow of electricity from the second electric circuit 15 side to the first electric circuit 14 side is blocked. That is, as shown by the arrows in Fig. 2, the flow of electricity from the first electric circuit 14 side to the second electric circuit 15 side is maintained by the rectification portion 23b belonging to the external relay unit 23. Accordingly, in this state, electric power can be supplied to the second electric load 22 not only from the second storage battery 12 but also from the first storage battery 11 or the alternator 18. On the other hand, electric power cannot be supplied to the first electric load 20 from the second storage battery 12 but is supplied thereto only from the first storage battery 11 or the alternator 18.

Further, the second storage battery 12 has a configuration in which a mechanical internal relay (internal switching unit) 24 is, for example, provided so that the connection state between the battery cell unit 13 and the connection wire 16 can be changed over suitably by the internal relay 24. Incidentally, the internal switching unit 24 may be constituted not by the mechanical relay but by a semiconductor relay or the like.

The external relay unit 23 and the internal relay 24 are controlled suitably by a battery control portion (BMU) 26 based on a signal from an ECU 25. The BMU 26 is constituted by a battery sensor (first charging state detection unit) for detecting the charging state or the like of the battery cell unit 13 constituting the second storage battery 12, a control unit for controlling the external relay unit 23 and the internal relay 24, etc. Although the BMU 26 also includes the second storage battery 12 in the embodiment, the BMU 26 may be provided separately from the second storage battery 12.

The ECU (Electronic Control Unit) 25 has an input/output unit, a storage unit for storing control programs, control maps, etc., a central processing unit, timers and counters. The ECU 25 totally controls the engine 17 including the alternator 18, the starter 19, etc. based on information from various sensors.

The ECU 25 also serves as a part of the vehicle battery system 10 according to the embodiment. For example, the ECU 25 controls the switching states of the external relay unit 23 and the internal relay 24 through the BMU 26 as described above, and controls the power generating state (amount of power generation) of the alternator 18 suitably. Thus, desired electric power can be supplied to various electric loads while the charging states (charging rates) of the first storage battery 11 and the second storage battery 12 are controlled suitably.

An example of control (charging control) of the charging states of the storage batteries in the vehicle battery system 10 will be described below.

The ECU 25 has a charging control unit 27 and a power generation margin determination unit 28 as means for controlling the charging states (charging rates) of the first storage battery 11 and the second storage battery 12.

The charging control unit 27 controls the amount of power generation in the alternator 18 in accordance with the charging states (charging rates) of the first storage battery 11 and the second storage battery 12, and charges the first storage battery 11 and the second storage battery 12. In the embodiment, the charging state of the first storage battery 11 is detected by the battery sensor (first charging state detection unit) 21, and the charging state of the second storage battery 12 is detected by the BMU (second charging state detection unit) 26. Based on the driving state and the environment state of the vehicle, etc. as well as detection results of the battery sensor 21 and the BMU 26, the charging control unit 27 controls driving of the engine 17 suitably so as to obtain a desired value as the amount of power generation in the alternator 18.

The charging control unit 27 starts power generation in the alternator 18 so as to start charging the first storage battery 11 or the second storage battery 12 when the first storage battery 11 or the second storage battery 12 appears to be discharged, that is, when the charging rate (SOC) of the first storage battery 11 or the second storage battery 12 falls to or below a charging start threshold. Then, the charging control unit 27 terminates the power generation in the alternator 18 as soon as the charging rate reaches a charging end threshold.

Incidentally, the aforementioned charging start threshold and the aforementioned charging end threshold are decided suitably in accordance with the characteristics of the storage batteries 11 and 12 and so on. In the embodiment, the charging start threshold and the charging end threshold for the first storage battery 11 are set at 90% and 95% respectively, and the charging start threshold and the charging end threshold for the second storage battery 12 are set at 30% and 50% respectively.

During normal time, the charging control unit 27 brings the internal relay 24 into the closed state (connection state) when charging the first storage battery 11 and the second storage battery 12. In this state, for example, during deceleration or idling of the vehicle, electric power generated in the alternator 18 is supplied not only to the first electric load 20 and the second electric load 22 but also to the first storage battery 11 and the second storage battery 12 as shown by the arrows in Fig. 2. Thus, the storage batteries 11 and 12 are charged concurrently. Incidentally, the words "normal time" here mean a state where one or both of the first storage battery 11 and the second storage battery 12 appear to be discharged, that is, the charging rate or rates are not higher than the charging start threshold or thresholds, but there is a margin in the power generation of the alternator 18. For example, a state where the charging rate of the first storage battery 11 or the second storage battery 12 is not higher than the charging start threshold but the power generation margin ratio of the alternator 18 which will be described later is not lower than a predetermined value corresponds to the "normal time".

After that, when the charging rate (SOC) of the first storage battery 11 or the second storage battery 12 reaches the charging end threshold or higher, the amount of power generation in the alternator 18 by the engine 17 during idling is, for example, suppressed, and charging the storage battery 11 or 12 is terminated.

As described above, the charging control unit 27 controls the power generation of the alternator 18 in accordance with the charging states of the first storage battery 11 and the second storage battery 12 during the normal time. However, the charging control unit 27 brings the internal relay 24 of the second storage battery 12 into the open state in accordance with some charging state (charging rate) of the second storage battery 12 and some determination result of the power generation margin determination unit 28, as will be described below.

The power generation margin determination unit 28 determines whether there is a margin in the power generation of the alternator 18 or not. In the embodiment, the power generation margin determination unit 28 determines whether the power generation margin ratio of the alternator 18 is equal to or lower than a predetermined value or not. The charging margin (power generation margin ratio) is a value showing the degree of margin remaining in the power generating state of the alternator 18. Specifically, the power generation margin ratio is a ratio of the maximum power generation amount of the alternator 18 to the total value of the amount of electric power consumed by the first electric load 20 and the second electric load 22 and the amount of electric power required for charging the first storage battery 11 and the second storage battery 12. For example, the power generation margin ratio is 0% when the aforementioned total value is not lower than the maximum power generation amount of the alternator 18.

Although the power generation margin determination unit 28 determines whether there is a margin in the power generation of the alternator 18 or not, the words "there is no margin in the power generation" here do not always mean the state where the power generation margin ratio is 0%. For example, the state where "there is no margin in the power generation" may also include a state where there is not an enough margin to charge the two storage batteries 11 and 12 concurrently, for example, when the power generation margin ratio temporarily reaches a predetermined value or lower, or when it takes too much time to charge the first storage battery 11 and the second storage battery 12. In the embodiment, the power generation margin determination unit 28 concludes that "there is no margin in the power generation" when the power generation margin ratio is not higher than a first predetermined value (for example, about 10%) .

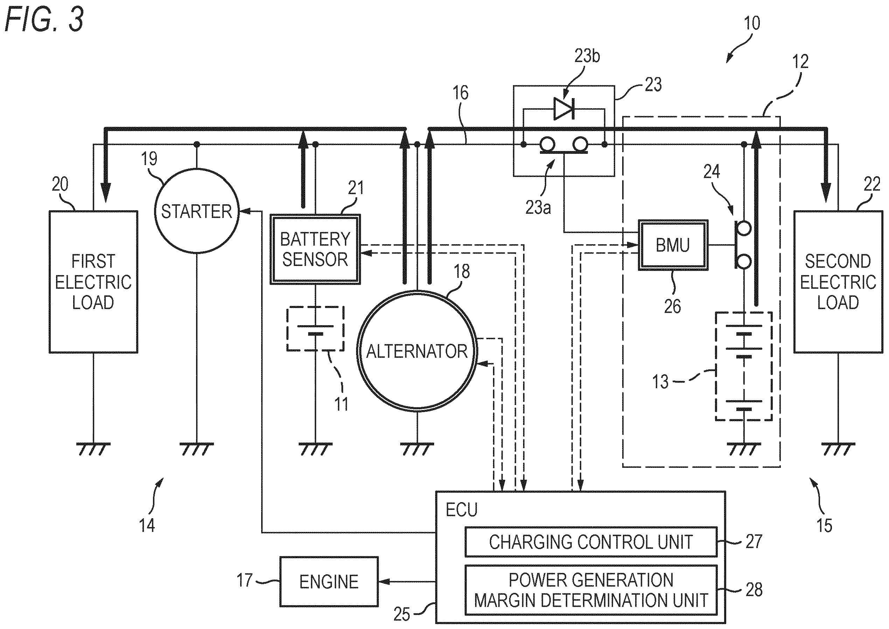

However, for example, assume that power consumption of the first electric load 20 or the second electric load 22 increases in the state where there is no margin in the power generation of the alternator 18. In this case, even if the first storage battery 11 and the second storage battery 12 are to be charged, the first storage battery 11 and the second storage battery 12 will be discharged as shown in Fig. 3 where the flow of electricity is illustrated by the arrows. Thus, the charging rates of the storage batteries 11 and 12 will decrease gradually. In addition, the second storage battery 12 consisting of a nickel-hydrogen battery or the like has a larger theoretical electromotive force than the first storage battery 11 consisting of a lead-acid battery. Therefore, the second storage battery 12 is discharged at a higher speed than the first storage battery 11. Therefore, when the first storage battery 11 and the second storage battery 12 are continuously discharged in this manner, there is a fear that the charged capacity of the second storage battery 12 may be extremely lowered.

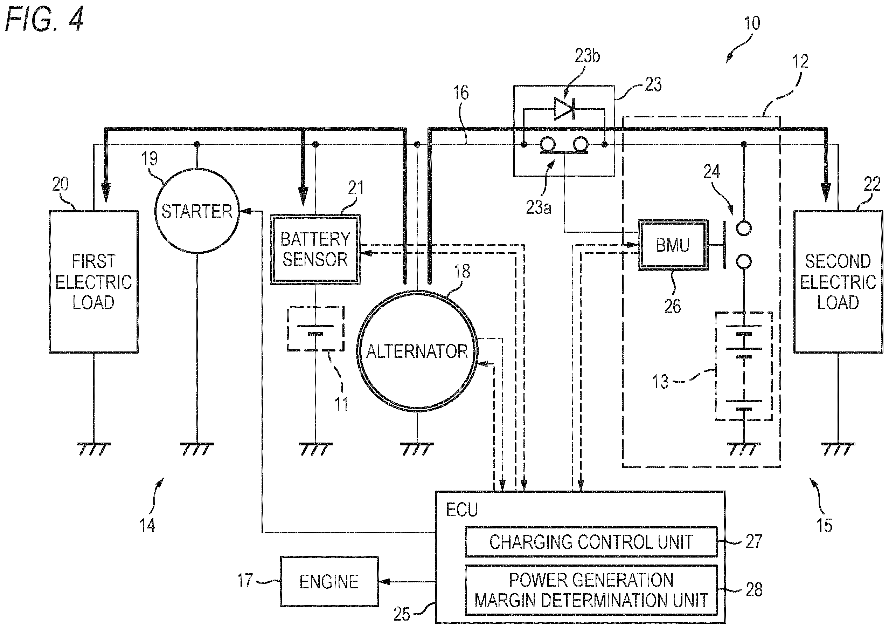

Therefore, the charging control unit 27 controls the switching state of the internal relay 24 suitably in order to suppress the extreme lowering of the charged capacity of the second storage battery 12. Specifically, when the BMU 26 detects that the charging rate of the second storage battery 12 is not higher than a minimum threshold (for example, about 10%) which is lower than the charging start threshold and further when the power generation margin determination unit 28 determines that "there is no margin in the power generation", that is, when the power generation margin ratio is not higher than a predetermined value, the charging control unit 27 controls, through the BMU 26, the internal relay 24 belonging to the second storage battery 12 and brings the internal relay 24 into the open state (disconnection state) as shown in Fig. 4 .

Thus, the second storage battery 12 can be prevented from being discharged. That is, there is no fear that the charged capacity of the second storage battery 12 is extremely lowered below the minimum threshold. It is therefore possible to suppress deterioration caused by the lowering of the charged capacity of the second storage battery 12.

When the power generation margin determination unit 28 then determines that "there is a margin in the power generation", that is, when the power generation margin determination unit 28 then determines that the power generation margin ratio is not lower than a second predetermined value, the charging control unit 27 changes over the internal relay 24 from the open state to the closed state (connection state). As a result, charging the second storage battery 12 as well as the first storage battery 11 is resumed. Although the second predetermined value may be equal to the first predetermined value, it is preferable that the second predetermined value is set at a value larger than the first predetermined value.

When the second predetermined value is equal to the first predetermined value, there is a fear that the internal relay 24 may be frequently switched in some driving state of the vehicle. Since a comparatively loud sound is generated whenever the internal relay 24 is switched, frequent switching control of the internal relay 24 may give an unpleasant feeling to passengers. Particularly when the second storage battery 12 is placed under the floor of the vehicle, an unpleasant feeling may be given to the passengers easily. However, when the second predetermined value is set at a value larger than the first predetermined value, the number of switching control of the internal relay 24 can be suppressed to be as low as possible.

In the embodiment, the internal relay 24 is controlled into the open state (disconnection state) when it is detected that the charging rate of the second storage battery 12 is not higher than the minimum threshold (for example, about 10%). However, the timing when the switching state of the internal relay 24 is controlled is not limited thereto. For example, the internal relay 24 may be controlled into the open state as soon as the charging rate of the second storage battery 12 decreases by a rate (for example, 2%) further after it is detected that the charging rate of the second storage battery 12 has been not higher than the minimum threshold. In addition, whether the charging rate of the second storage battery 12 decreases by the rate or not may be determined based on the duration in which the charging rate is not higher than the minimum threshold. Specifically, when the fact that the charging rate of the second storage battery 12 is not higher than the minimum threshold is detected, the duration of the fact is measured. When the duration is not shorter than a predetermined time, it may be determined that the charging rate of the second storage battery 12 decreases by the rate (for example, 2%).

When the internal relay 24 is controlled into the open state in this manner as soon as the charging rate of the second storage battery 12 decreases by the rate (for example, 2%), the internal relay 24 can be controlled into the closed state at a more suitable timing. For example, even when the charging rate of the second storage battery 12 reaches the minimum threshold or lower, it can be also considered that the power consumption of the first electric load 20 and the second electric load 22 may decrease then so that the charging rate of the second storage battery 12 will be higher than the minimum threshold in a short time. When the switching state of the internal relay 24 is controlled in such a case, the switching control of the internal relay 24 is so frequent that an unpleasant feeling may be given to the passengers as described above. However, the number of switching control of the internal relay 24 can be suppressed to be as low as possible when the internal relay 24 is controlled into the open state as soon as the charging rate of the second storage battery 12 decreases by the rate as described above.

## Claims

1. A vehicle battery system comprising:
a first storage battery (11) which is configured to supply electric power to a starter (19) for starting up an engine;
a second storage battery (12) which is connected in parallel with the first storage battery and which includes an internal switching unit that is configured to switch a connection state with the first storage battery;
an alternator (18) which is connected to the first and second storage batteries and which is configured to be driven by the engine so as to generate electric power;
a charging state detection unit (26) which is configured to detect a charging state of the second storage battery:
a charging control unit (27) which is configured to control a power generating state of the alternator and a switching state of the internal switching unit based on a detection result of the charging state detection unit; and
a power generation margin determination unit (28) which is configured to determine whether there is a margin in the power generation of the alternator or not, wherein,
when the charging state detection unit detects that a charging rate of the second storage battery is not higher than a minimum threshold, and the power generation margin determination unit determines that there is no margin in the power generation, the charging control unit controls the internal switching unit into an open state, and, when the power generation margin determination unit determines that there is a margin in the power generation, the charging control unit changes the internal switching unit from the open state to a closed state.

2. The vehicle battery system according to claim 1, wherein
the charging control unit (27) controls the internal switching unit into the open state as soon as the charging rate of the second storage battery (12) decreases by a rate after the charging state detection unit detects that the charging rate of the second storage battery is not higher than the minimum threshold.

3. The vehicle battery system according to claim 1, wherein
the first storage battery (11) consists of a lead-acid battery, and the second storage battery (12) consists of a nickel-hydrogen battery or a lithium ion battery.

## Patentansprüche

1. Fahrzeugbatteriesystem, aufweisend:
eine erste Speicherbatterie (11), die konfiguriert ist, um elektrische Energie an einen Starter (19) zum Starten eines Motors zu versorgen;
eine zweite Speicherbatterie (12), die parallel mit der ersten Speicherbatterie geschaltet ist und die eine interne Schalteinheit aufweist, die konfiguriert ist, um einen Verbindungszustand mit der ersten Speicherbatterie umzuschalten;
einen Wechselstromgenerator (18), der mit der ersten und der zweiten Speicherbatterie verbunden ist, und der so konfiguriert ist, dass er vom Motor angetrieben wird, um elektrische Energie zu erzeugen;
eine Ladezustandserfassungseinheit (26), die zum Erfassen eines Ladezustands der zweiten Speicherbatterie konfiguriert ist;
eine Ladesteuereinheit (27), die zum Steuern eines Energieerzeugungszustands des Wechselstromgenerators und eines Schaltzustands der internen Schalteinheit auf Basis eines Erfassungsergebnisses der Ladezustandserfassungseinheit konfiguriert ist; und
eine Energieerzeugungsgrenzbestimmungseinheit (28), die konfiguriert ist, um zu bestimmen, ob in der Energieerzeugung des Wechselstromgenerators ein Spielraum vorhanden ist oder nicht, wobei,
wenn die Ladungszustandserfassungseinheit erfasst, dass eine Ladungsrate der zweiten Speicherbatterie nicht höher ist als ein Mindestschwellenwert, und die Energieerzeugungsgrenzbestimmungseinheit bestimmt, dass bei der Energieerzeugung kein Spielraum vorhanden ist, die Ladesteuereinheit die interne Schalteinheit in einen offenen Zustand steuert, und, wenn die Energieerzeugungsgrenzbestimmungseinheit bestimmt, dass bei der Energieerzeugung Spielraum vorhanden ist, die Ladesteuereinheit die interne Schalteinheit von einem offenen Zustand in einen geschlossenen Zustand steuert.

2. Fahrzeugbatteriesystem nach Anspruch 1, wobei
die Ladesteuereinheit (27) die interne Schalteinheit in den offenen Zustand steuert, sobald die Laderate der zweiten Batterie (12) um eine Rate abnimmt, nachdem die Ladezustandserfassungseinheit erfasst hat, dass die Laderate von der zweiten Speicherbatterie nicht höher ist als der Mindestschwellenwert.

3. Fahrzeugbatteriesystem nach Anspruch 1, wobei
die erste Speicherbatterie (11) aus einer Blei-Säure-Batterie besteht und die zweite Speicherbatterie (12) aus einer Nickel-Wasserstoff-Batterie oder einer Lithium-Ionen-Batterie besteht.

## Revendications

1. Système de batterie de véhicule comprenant :
une première batterie d'accumulateurs (11) qui est configurée pour fournir la puissance électrique à un démarreur (19) pour démarrer un moteur à combustion interne ;
une deuxième batterie d'accumulateurs (12) qui est connectée en parallèle avec la première batterie d'accumulateurs et qui comprend une unité de commutation interne qui est configurée pour commuter un état de connexion avec la première batterie d'accumulateurs ;
un alternateur (18) qui est connecté aux première et deuxième batteries d'accumulateurs et qui est configuré pour être entraîné par le moteur à combustion interne de manière à générer la puissance électrique ;
une unité de détection d'état de charge (26) qui est configurée pour détecter un état de charge de la deuxième batterie d'accumulateurs ;
une unité de commande de charge (27) qui est configurée pour commander un état de génération de puissance de l'alternateur et un état de commutation de l'unité de commutation interne sur la base d'un résultat de détection de l'unité de détection d'état de charge ; et
une unité de détermination de marge de génération de puissance (28) qui est configurée pour déterminer s'il y a une marge dans la génération de puissance de l'alternateur ou non, dans lequel,
lorsque l'unité de détection d'état de charge détecte qu'un taux de charge de la deuxième batterie d'accumulateurs n'est pas supérieur à un seuil minimum, et que l'unité de détermination de marge de génération de puissance détermine qu'il n'y a pas de marge dans la génération de puissance, l'unité de commande de charge commande l'unité de commutation interne dans un état ouvert, et, lorsque l'unité de détermination de marge de génération de puissance détermine qu'il y a une marge dans la génération de puissance, l'unité de commande de charge change l'unité de commutation interne de l'état ouvert à un état fermé.

2. Système de batterie de véhicule selon la revendication 1, dans lequel
l'unité de commande de charge (27) commande l'unité de commutation interne dans l'état ouvert dès que le taux de charge de la deuxième batterie d'accumulateurs (12) diminue d'un taux après que l'unité de détection d'état de charge a détecté que le taux de charge de la deuxième batterie d'accumulateurs n'est pas supérieur au seuil minimum.

3. Système de batterie de véhicule selon la revendication 1, dans lequel
la première batterie d'accumulateurs (11) est constituée d'une batterie au plomb, et la deuxième batterie d'accumulateurs (12) est constituée d'une batterie nickel-hydrogène ou d'une batterie au lithium.
